# FASCICULE DE BREVET EUROPEEN

(11) **EP 2 707 437 B1**
(45) Date de publication et mention de la délivrance du brevet: **05.06.2019**
(21) Numéro de dépôt: 12722896.3
(22) Date de dépôt: 04.05.2012
(51) Int. Cl.: C09C 1/30, C09C 1/36, C09C 3/10, C01B 13/00, C01B 13/14, C01F 7/02, C08L 29/04, C08L 79/04, C09K 5/10, B82Y 40/00, C09K 5/14, C08K 3/22

(54) **NANOPARTICULES AUTODISPERSANTES**
SELBSTDISPERGIERENDE NANOPARTIKEL
SELF-DISPERSING NANOPARTICLES

(30) Priorité: 11.05.2011 FR 1101434
(43) Date de publication de la demande: 19.03.2014
(73) Titulaire: Commissariat à l'Énergie Atomique et aux Énergies Alternatives, 75015 Paris (FR)
(72) Inventeur: PONCELET, Olivier, F-38000 Grenoble (FR); BORLET, Renaud, F-38120 Saint Egreve (FR); GETTO, Daniel, F-38120 Le Fontanil (FR)
(74) Mandataire: Gevers & Orès
(86) Numéro de dépôt international: PCT/IB2012/052248
(87) Numéro de publication internationale: WO 2012/153251

(56) Documents cités:
- WO-A1-2005/061602
- FR-A1- 2 955 043
- Michael D. McHugh: "IMMUNE-NANOTOXICITY OF ZINC OXIDE NANOPARTICLES:DESIGN OF AN INHIBITION-BASED INVESTIGATION", Drexel University , mai 2010 (2010-05), XP002663984, Extrait de l'Internet: URL:http://idea.library.drexel.edu/bitstre am/1860/3280/1/McHugh,%20Michael%20D.pdf [extrait le 2011-11-21]
- S.V. MANORAMA ET AL: "Photostabilization of dye on anatase titania nanoparticles by polymer capping", JOURNAL OF PHYSICS AND CHEMISTRY OF SOLIDS, vol. 63, no. 1, 1 janvier 2002 (2002-01-01), pages 135-143, XP55029848, ISSN: 0022-3697, DOI: 10.1016/S0022-3697(01)00089-0
- LAI W Y ET AL: "Convective heat transfer for water-based alumina nanofluids in a single 1.02-mm tube", THERMAL AND THERMOMECHANICAL PHENOMENA IN ELECTRONIC SYSTEMS, 2008. ITHERM 2008. 11TH INTERSOCIETY CONFERENCE ON, IEEE, PISCATAWAY, NJ, USA, 28 mai 2008 (2008-05-28), pages 970-978, XP031273810, ISBN: 978-1-4244-1700-1
- GUO L ET AL: "Synthesis and Characterization of Poly(vinylpyrrolidone)-Modified Zinc oxide nanoparticles", CHEMISTRY OF MATERIALS, AMERICAN CHEMICAL SOCIETY, WASHINGTON, US, vol. 12, 1 janvier 2000 (2000-01-01), pages 2268-2274, XP002346933, ISSN: 0897-4756, DOI: 10.1021/CM9907817
- KUMAR R V ET AL: "Synthesis and characterization of a micro scale zinc oxide-PVA composite by ultrasound irradiation and the effect of composite on the crystal growth of zinc oxide", JOURNAL OF CRYSTAL GROWTH, ELSEVIER, AMSTERDAM, NL, vol. 250, no. 3-4, 1 avril 2003 (2003-04-01), pages 409-417, XP004411735, ISSN: 0022-0248, DOI: 10.1016/S0022-0248(02)02411-9

## Description

L'invention concerne un procédé de fabrication de nanoparticules autodispersantes dans l'eau.

Elle concerne également le fluide caloporteur comprenant de l'eau et les nanoparticules de l'invention ou les nanoparticules obtenues par le procédé de l'invention.

En particulier, le fluide caloporteur de l'invention peut être obtenu par injection, *in situ* dans le circuit de refroidissement du dispositif à refroidir, contenant de l'eau.

Les nanofluides, c'est-à-dire les fluides contenant des nanoparticules, en particulier d'un oxyde minéral, sont des fluides qui contiennent des particules d'oxyde dont la taille est inférieure au micromètre. La taille de ces particules peut aller jusqu'à une taille aussi faible que quelques dizaines de nanomètres.

Ces nanofluides sont des suspensions, ou des dispersions, ou des sols, ou des solutions colloïdales, de nanoparticules.

Ces fluides sont utilisés dans de nombreux domaines.

Ils sont en particulier utilisés en tant que liquide de refroidissement (fluide caloporteur) de dispositifs divers.

Cependant, à l'heure actuelle, les nanofluides, qui contiennent une grande quantité d'eau, doivent être fabriqués au préalable puis transportés et stockés sur le site d'utilisation et mis en place dans le dispositif.

Cela pose un problème de transport car le nanofluide contient déjà le fluide porteur aqueux, ce qui augmente son encombrement et son poids et risque de provoquer des fuites. Il est difficile à transporter et à stocker. De plus, durant la période de stockage, il existe des risques de décantation dûs par exemple à des contaminations bactériennes ou des chocs thermiques, altérant les propriétés du nanofluide.

Par ailleurs, il est actuellement impossible de disperser instantanément des poudres de taille nanométrique (c'est-à-dire composées de particules dont la plus grande dimension est inférieure au micromètre) qui ont été séchées préalablement, dans un fluide porteur, et en particulier l'eau. En effet, les forces de cohésion qui s'exercent entre les nanoparticules sont impossibles à vaincre sans utiliser des techniques de dispersion très énergétiques. De plus, même si ces techniques sont appliquées, la distribution de la taille finale des nanoparticules obtenues est très large.

Or, dans le cas des liquides de refroidissement, la performance thermique du nanofluide, c'est-à-dire sa conductivité thermique, est directement corrélée à la taille ou plus précisément à la surface spécifique développée des nanoparticules vis-à-vis du solvant, à la forme des nanoparticules, et à la concentration de nanoparticules dans le nanofluide.

Michael D. McHugh dans «IMMUNE-NANOTOXICITY OF ZINC Oxide NANOPARTICLES: DESIGN OF AN INHIBITION-BASEDINVESTIGATION», University Drexel, mai 2010 (2010-05) décrit une méthode pour obtenir des nanoparticules d'oxyde de zinc encapsulées par du polyéthylène glycol. Les nanoparticules sont obtenues en mettant en contact une dispersion de ZnO et le PEG. Le mélange est ensuite laissé sous agitation et lyophilisé.

Cependant, ce document est muet quant à une étape de phase de trempe thermique.

S.V. MANORAMA et al. dans «Photostabilization of dye on anatase titania Nanoparticles by polymer capping, JOURNAL OF PHYSICS AND CHEMISTRY OF SOLIDS, Vol. 63, n° 1, 1 janvier 2002, pages 135-143» décrivent des nanoparticules d'oxyde de zinc de structure wurtzite recouvertes de poly(vinyl pyrolidone). Cependant, le procédé d'obtention de ces nanoparticules ne comprend pas d'étape de trempe thermique, en particulier.

LAI W Y et al. dans «Convective heat Transfer for water-based alumina nanofluids in a single 1.02-mm tube», THERMAL AND THERMOMECHANICAL PHENOMENA IN ELECTRONIC SYSTEMS, 2008, ITHERM 2008, 11th Inter Society Conference on, IEEE, PISCATAWAY, NJ, USA, 28 mai 2008, décrivent des nanofluides ayant de bonnes performances de transfert thermique. Ces nanofluides ne comprennent pas des nanoparticules autodispersantes.

Le document EP 2,524,011 décrit un procédé pour le traitement de nanoparticules à base d'oxyde avec des polymères hydrosolubles comprenant la mise en contact d'une solution organique des nanoparticules avec une solution du polymère hydrosoluble.

L'invention vise à résoudre le problème de l'obtention de poudres de particules de taille nanométrique qui soient autodispersantes, c'est-à-dire qui se dispersent par elles-mêmes dans un liquide porteur, plus précisément et plus particulièrement dans l'eau.

Les poudres obtenues pourront donc être transportées et utilisées *in situ* et à la demande, sans engendrer de coûts de transport et de stockage supplémentaires. De plus, lorsqu'injectées dans le circuit de refroidissement d'un dispositif, elles seront immédiatement dispersées et continueront leur office de refroidissement sans aucun brassage qui serait obtenu grâce à des pompes de recirculation.

Dans la suite du texte et les revendications, les termes « nanoparticule(s) autodispersante(s) » désignent les nanoparticules traitées par le procédé de l'invention et le terme « nanoparticule(s) » désigne des particules non encore traitée(s) par le procédé de l'invention.

Ainsi, par « nanoparticule(s) autodispersante(s) », on entend, en particulier, des nanoparticules se présentant sous la forme d'agrégats poreux comprenant en outre au moins un polymère tel que défini ci-après dans le cadre de l'invention.

Les agrégats peuvent se présenter sous la forme de billes poreuses de tailles variables, par exemple de billes poreuses ayant un diamètre compris entre 10 µm et 1 cm, inclus, plus particulièrement de l'ordre du mm.

Mais, les termes « nanoparticule(s) autodispersante(s) » pourront, en particulier lorsqu'un broyage des agrégats cité ci-dessus est réalisé, désigner la poudre constituée de nanoparticules individualisées par le broyage et comprenant en outre un polymère tel que défini ci-après dans le cadre de l'invention.

A cet effet, l'invention propose une méthode de fabrication d'une poudre d'oxydes de taille nanométrique qui est autodispersante (nanoparticules autodispersantes) ainsi qu'un procédé de fabrication d'un liquide de refroidissement les comprenant.

Les poudres de nanoparticules seront plus particulièrement des poudres d'alumine (Al₂O₃), d'oxyde de zinc (ZnO), d'oxyde de titane (TiO₂), de silice (SiO₂) et d'oxyde de béryllium (BeO).

En effet, ces poudres ont une conductivité thermique qui les rend appropriées pour la fabrication d'un fluide de refroidissement.

Dès lors, un premier objet de l'invention est un procédé de fabrication de nanoparticules autodispersantes telles que définies dans les revendications annexées

L'invention propose aussi un procédé de fabrication d'une dispersion de nanoparticules autodispersantes caractérisé en ce qu'il comprend le mélange de nanoparticules autodispersantes choisies parmi les nanoparticules d'alumine (Al₂O₃), de silice (SiO₂) et d'oxyde de béryllium (BeO) obtenues par le procédé de l'invention dans de l'eau. Dans ce procédé, de préférence, le rapport en masse nanoparticules autodispersantes/eau est compris entre 5 et 10% inclus.

L'invention propose encore un fluide caloporteur caractérisé en qu'il comprend de l'eau et des nanoparticules comprenant des nanoparticules autodispersantes et un polymère hydrosoluble, lesdites nanoparticules autodispersantes étant choisies parmi les nanoparticules d'alumine (Al₂O₃), d'oxyde de zinc (ZnO₂), d'oxyde de titane (TiO₂), de silice (SiO₂) et d'oxyde de béryllium (BeO) et ledit polymère hydrosoluble étant choisi parmi les alcools polyvinyliques, les polyéthylènes glycols et les polyvinylpyrrolidones, les polyoxazolines, les amidons, et les mélanges de deux ou plus de ceux-ci.

L'invention sera mieux comprise et d'autres avantages et caractéristiques de celles-ci apparaitront plus clairement à la lecture de la description explicative qui suit et qui est faite en référence à la figure unique annexée qui représente l'évolution de la conductivité thermique de nanoparticules autodispersantes d'alumine selon l'invention ou obtenues par le procédé de l'invention, injectées dans de l'eau, en comparaison à l'évolution de la conductivité thermique d'eau seule ou d'eau contenant un polymère hydrosoluble utilisé pour fabriquer les nanoparticules autodispersantes selon l'invention ou d'un simple mélange de nanoparticules d'alumine et de polymère hydrosoluble, en fonction du pourcentage en masse de nanoparticules autodispersantes selon l'invention, ou de polymère hydrosoluble, ou de nanoparticules d'alumine et de polymère hydrosoluble non traités selon l'invention.

Les nanoparticules autodispersantes de l'invention sont plus particulièrement obtenues à partir des nanoparticules d'oxyde de béryllium, d'alumine, d'oxyde de zinc, d'oxyde de titane ou de silice.

En effet, les conductivités thermiques de ces oxydes minéraux sont celles qui présentent le plus d'intérêt en tant que liquide de refroidissement.

Les conductivités thermiques de ces oxydes minéraux, en W m⁻¹.K⁻¹ sont reportées au tableau 1 ci-dessous :

**Tableau 1**

| **Oxyde minéral** | **Conductivité thermique** |
|---|---|
| BeO | 230 |
| Al₂O₃ | 40 |
| ZnO | 29 |
| TiO₂ | 8,4 |
| SiO₂ | 1,34 |

Ces conductivités thermiques sont les conductivités thermiques des oxydes minéraux à 25°C.

De préférence, on utilise des nanoparticules d'alumine α(α-Al₂O₃).

Plus préférablement, ces nanoparticules d'alumine α ont la forme de plaquettes et une distribution de la taille des particules très précise.

La taille des particules est mesurée par diffusion différentielle de la lumière (dls).

Ainsi, les particules d'alumine α utilisées de préférence dans l'invention sont des particules en forme de plaquettes, c'est-à-dire ont la forme de particules plates dont l'épaisseur est la plus petite dimension et est inférieure ou égale à 30 nm de préférence entre 15 et 25 nm et qui ont une répartition de taille précise :
- 90 à 95% en nombre des particules ont une taille inférieure ou égale à 210 nm,
- 50% en nombre de ces 90 à 95% de particules ont une taille inférieure ou égale à 160 nm. De préférence, de plus, 10%, en nombre de ces 90 à 95% de particules ont une taille inférieure ou égale à 130 nm.

Outre cette distribution granulométrique particulière, les nanoparticules d'alumine α utilisées de préférence dans l'invention ont une taille comprise entre 300 et 60 nm.

Par taille, on entend la plus grande dimension de ces nanoparticules, et typiquement, leur diamètre moyen. Cette taille est mesurée par microscopie à transmission.

Un exemple particulièrement préféré d'une telle alumine est l'alumine BA15PS® commercialisée par la société BAIKOWSKI.

L'alumine BA15PS® est une alumine α, cristallisée ne contenant pas de phases parasites, en forme de plaquettes dont la distribution de taille est telle que 90 à 95% des nanoparticules présentent une taille inférieure ou égale à 210 nm, et que parmi 90 à 95% de nanoparticules, 50% ont une taille inférieure ou égale à 160 nm et seulement 10% de ces 90 à 95 de nanoparticules ont une taille inférieure ou égale à 130 nm

A titre indicatif, la conductivité thermique de l'eau seule, à 25°C, est de 0,608 W m⁻¹.K⁻¹.

Le procédé de fabrication de nanoparticules autodispersantes selon l'invention consiste à traiter une dispersion aqueuse des nanoparticules voulues pour obtenir des nanoparticules autodispersantes sous forme de poudre qui seront autodispersantes.

Dans l'invention, par « dispersion aqueuse », on entend toutes suspensions, solutions colloïdales ou sols, stables, de nanoparticules.

On pourra fabriquer cette dispersion aqueuse de départ ou alors utiliser une dispersion aqueuse déjà fabriquée.

Le procédé de l'invention consiste alors à ajouter un polymère hydrosoluble n'ayant pas d'interaction chimique ni avec l'eau, ni avec les nanoparticules dans cette suspension.

Cela signifie que le polymère hydrosoluble utilisé ne doit pas modifier chimiquement ou physiquement les nanoparticules, en particulier lorsque celles ci sont dans leur solvant, ici plus particulièrement l'eau.

Dans le cas des nanoparticules d'oxyde béryllium, d'alumine, d'oxyde de zinc, d'oxyde de titane et de silice, le polymère hydrosoluble sera de préférence choisi parmi les alcools polyvinyliques (PVA), les polyéthylène glycols (PEG), les polyvinylpyrrolidones (PVP), les polyoxazolines et les amidons.

Les mélanges de ceux-ci peuvent être utilisés.

On procède alors à une trempe thermique de la dispersion obtenue contenant les nanoparticules et le polymère hydrosoluble, puis à la lyophilisation de cette dispersion trempée. On obtient alors les nanoparticules autodispersantes selon l'invention.

La trempe est une trempe thermique. Par trempe thermique, on entend en particulier une trempe à une température inférieure à -80°C, de préférence inférieure à - 100°C et plus préférablement à une température de l'ordre de -180°C.

Selon un mode de réalisation préféré du procédé de l'invention, la trempe thermique est réalisée par une mise en contact de la dispersion avec de l'azote liquide.

Les nanoparticules obtenues peuvent être sous forme d'agrégats poreux de plusieurs nanoparticules. L'obtention d'agrégats est un avantage dans la mesure où leur manipulation est plus facile et présente moins de problème de sécurité sanitaire. Cependant, ces agrégats peuvent être ensuite broyés. Mais chaque grain individuel constituant ces agrégats est une nanoparticule autodispersante selon l'invention et lorsque les agrégats sont remis en suspension dans de l'eau, ils se redispersent en nanoparticules autodispersantes ayant la même taille que les nanoparticules utilisées au départ.

Dès lors, les termes « nanoparticule(s) autodispersante(s) » et « agrégats poreux de nanoparticules » sont équivalents, selon un mode de réalisation préféré de l'invention.

En tant que polymère hydrosoluble, on préférera utiliser les alcools polyvinyliques, les polyéthylènes glycols, les polyvinylpyrrolidones car ces polymères sont facilement disponibles et également faciles à mettre en oeuvre.

La quantité de polymère hydrosoluble à ajouter dans la suspension aqueuse de nanoparticules lors de la mise en oeuvre du procédé de l'invention peut être très variable, en fonction de l'utilisation finale voulue des nanoparticules autodispersantes obtenues au final lorsqu'elles seront injectées et autodispersées dans un fluide ou solvant, en particulier l'eau.

Cette quantité dépendra en particulier de la viscosité souhaitée du fluide final.

Dans le cas plus particulier des fluides de refroidissement, et où la viscosité peut être un facteur important, en particulier pour la circulation du fluide, lorsque les pompes de recirculation de refroidissement sont stoppées, on préfèrera utiliser les polymères hydrosolubles suivants :
- les alcools polyvinyliques ayant un poids moléculaire en masse de 31 000 à 50 000 g. mol⁻¹ inclus, ou
- la poly-2-éthyloxazoline ayant un poids moléculaire en masse de 50 000 g. mol⁻¹, ou
- les polyvinylpyrrolidones ayant un poids moléculaire en masse compris entre 10 000 et 40 000 g. mol⁻¹, ou
- les polyéthylènes glycols ayant un poids moléculaire en masse compris entre 7 000 et 35 000 g. mol⁻¹.

Toujours dans le cas où les nanoparticules autodispersantes selon l'invention sont obtenues à partir des nanoparticules d'alumine ou d'oxyde de zinc, on utilisera, de préférence, comme polymère hydrosoluble, un alcool polyvinylique ayant un poids moléculaire en masse compris entre 31 000 et 51 000 g. mol⁻¹ inclus, à un rapport en masse nanoparticules/polymère hydrosoluble compris entre 4,5 et 30, inclus de préférence compris entre 6 et 7, inclus.

Les nanoparticules autodispersantes susceptibles d'être obtenues par le procédé de l'invention sont caractérisées en ce qu'elles comprennent un polymère hydrosoluble choisi, de préférence, parmi les alcools polyvinyliques, les polyéthylène glycols, les polyvinylpyrrolidones, les polyoxazolines, les amidons et les mélanges de deux ou plus de ceux-ci. De préférence, dans le cas où elles sont destinées à être utilisées pour reconstituer des fluides de refroidissement, le polymère hydrosoluble est choisi parmi les alcools polyvinyliques, les polyéthylène glycols et les polyvinylpyrrolidones.

Egalement de préférence, le polymère hydrosoluble présent pour former les nanoparticules autodispersantes de l'invention aura préférablement des poids moléculaires en masse compris entre 31 000 et 50 000 g. mol⁻¹ pour les alcools polyvinyliques, d'environ 50 000 g. mol⁻¹ pour la poly-2-éthyloxazoline, entre 10 000 et 40 000 g. mol⁻¹ pour les polyvinylpyrrolidones et entre 7 000 à 35 000 g. mol⁻¹ pour les polyéthylène glycols.

Toujours de préférence, les nanoparticules autodispersantes de l'invention contiendront un rapport en masse nanoparticules/polymère hydrosoluble compris entre 4,5 et 30 inclus, de préférence entre 6 et 7 inclus.

Les nanoparticules autodispersantes de l'invention ou obtenues par le procédé de l'invention sont autodispersantes et peuvent dont être utilisées pour la fabrication d'un fluide caloporteur (fluide de refroidissement).

Ainsi l'invention concerne un procédé de fabrication d'un fluide caloporteur qui comprend une simple étape d'injection des nanoparticules autodispersantes, dans le circuit de refroidissement d'un dispositif à refroidir contenant le liquide porteur, de préférence l'eau.

Les nanoparticules autodispersantes de l'invention ou obtenues par le procédé de l'invention, seront, dans le cas d'un fluide caloporteur, présentes en une quantité en masse comprise entre à 5 à 10% par rapport au poids total des nanoparticules autodispersantes selon l'invention ou obtenues par le procédé de l'invention /eau.

En effet, cette quantité est suffisante pour assurer la même capacité de refroidissement qu'un nanofluide non traité par le procédé de l'invention contenant 17% en masse de nanoparticules.

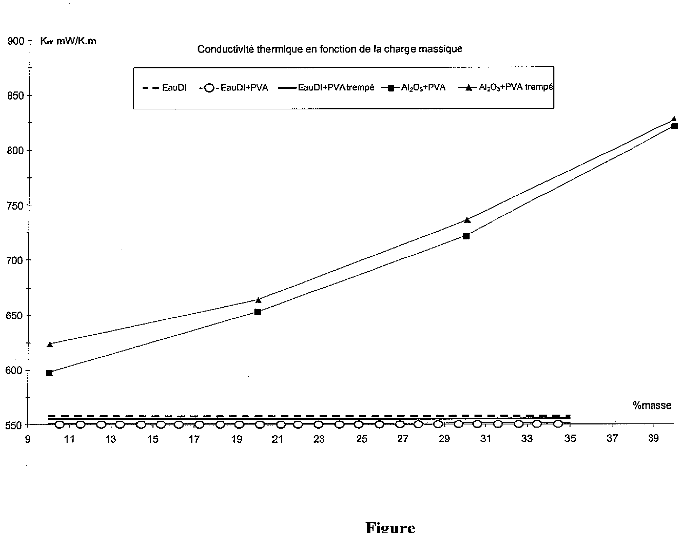

Cela est montré en figure 1, en comparant la courbe de l'évolution de la conductivité thermique en fonction de la charge massique représentée par la courbe 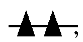 des nanoparticules autodispersantes de l'invention et la courbe représentée par 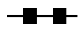 qui montre l'évolution de la conductivité thermique d'un fluide constitué d'eau et de particules d'alumines et de polymère hydrosoluble non traités selon l'invention.

Le fluide caloporteur obtenu avec les nanoparticules autodispersantes selon l'invention ou obtenues par le procédé selon l'invention est également un objet de l'invention.

Ce fluide caloporteur comprend de l'eau et des nanoparticules autodispersantes selon l'invention ou obtenues par le procédé selon l'invention, de préférence contenant entre 5 à 10% en masse de nanoparticules autodispersantes selon l'invention ou obtenues par le procédé selon l'invention, par rapport au poids total de nanoparticules autodispersantes selon l'invention ou obtenues par le procédé selon l'invention + eau.

Le fluide caloporteur de l'invention est obtenu par injection, directement dans le circuit de refroidissement du dispositif à refroidir, contenant de l'eau, des nanoparticules autodispersantes selon l'invention ou obtenues par le procédé selon l'invention.

Afin de mieux faire comprendre l'invention, on va en décrire maintenant à titre purement illustratif et non limitatif plusieurs exemples de mises en oeuvre.

### Exemple 1 : Synthèse de nanoparticules d'alumine, selon l'invention.

5g d'alcool polyvinylique (PVA) d'un poids moléculaire en masse compris entre 31 000 et 50 000 g. mol⁻¹, (FLUKA : PVA 4-88), en poudre, sont ajoutés à 95ml d'eau DI et le milieu réactionnel est mis sous agitation pendant 1H à 50°C jusqu'à totale dissolution du polymère.

La solution de PVA est ajoutée à température ambiante à 45,33g d'un sol colloïdal aqueux d'alumine α Baikowski BA15PS® dont le titre massique en alumine est de 75%.

Le milieu réactionnel est blanc laiteux, très homogène sans formation de précipité. Après 1h de mélange à température ambiante, la conductivité thermique est alors mesurée à 20°C (au bain thermostaté) en utilisant un appareil type K2D Pro.

Le même milieu réactionnel est alors ajouté goutte-à-goutte dans de l'azote liquide (DEWAR 5 1), le diamètre des gouttes est d'environ 5mm. Les billes obtenues après trempe dans l'azote liquide sont alors filtrées sur un Büchner en plastique. Elles sont pesées et mises à lyophiliser pendant 48H. Après cette lyophilisation on obtient des agrégats poreux de nanoparticules autodispersantes, ces agrégats ayant la forme et la taille des gouttes introduites dans l'azote liquide. Bien sûr, la taille et la forme des gouttes ajoutées dans l'azote liquide, et donc des agrégats obtenus, peuvent être modifiées, en particulier en utilisant un moyen d'injection des gouttes dans l'azote liquide qui modifie cette forme ou encore selon la technique de trempe utilisée.

La lyophilisation dure en général 48H. Après 36H, on arrête la lyophilisation et on pèse les billes. Elles sont remises alors à lyophiliser pendant 12H, puis elles sont repesées. Nous considérons que la lyophilisation est terminée si la variation de masse entre t36H et t48H n'excède pas 0,005%. Typiquement 0,5g pour 100g de matière engagée. Les billes sont alors conditionnées sous argon et conservées à température ambiante.

L'alcool polyvinylique utilisé ici a une masse moléculaire < à 100 000.

Au-delà de cette masse moléculaire, il faut utiliser une durée supérieure de mélange, à température ambiante, de l'alcool polyvinylique dans le sol colloïdal de nanoparticules.

Les agrégats obtenus à cet exemple après la lyophilisation ont la taille de gouttes d'environ 5 mm de diamètre.

Après la lyophilisation, les billes sèches conservent la même taille.

Il est à noter que l'ordre d'addition alcool polyvinylique /suspension colloïdale ne modifie en rien le résultat obtenu, tout comme le fait de chauffer ou d'augmenter le temps de mélange alcool polyvinylique + sol colloïdal aqueux.

### Exemple 2 :

On a procédé comme à l'exemple 1 sauf que la quantité d'alcool polyvinylique ajoutée était de 2,5g, ce qui correspond à un rapport en masse Al₂O₃/PVA de 13,6.

### Exemple 3 :

On a procédé comme à l'exemple 1 mais en ajoutant que 1,5g en masse de PVA.

### Exemple 4 :

On a procédé comme à l'exemple 1 mais en ajoutant 7g de PVA.

Les masses d'alumine, de PVA, le rapport en masse alumine/PVA, le pourcentage en masse par rapport au total de dispersion obtenu d'Al₂O₃ et le pourcentage en masse totale par rapport au poids total de la dispersion obtenue au final pour les exemples 1 à 4 sont reportés au tableau 2 ci-après :

**Tableau 2**

| échantillon | Masse Al₂O₃ (g) | Masse PVA (g) | Al₂O₃/PVA massique | %Al₂O₃ massique total (dispersion) | %PVA massique total (dispersion) |
|---|---|---|---|---|---|
| Exemple 1 | 34 | 5 | 6,8 | 11,32 | 1,6 |
| Exemple 2 | 34 | 2,5 | 13,6 | 11,32 | 0,8 |
| Exemple 3 | 34 | 1,25 | 27,2 | 11,32 | 0,4 |
| Exemple 4 | 34 | 7 | 4,85 | 11,32 | 2,3 |

### Exemple 5 :

A cet exemple, on a utilisé en tant que polymère hydrosoluble de la polyéthyl-2-oxazoline d'un poids moléculaire de 50 000.

5g de polyéthyl-2 oxazoline ; Aldrich : PM 50000 g. mol⁻¹ en poudre sont ajoutés à 95ml d'eau DI et le milieu réactionnel est mis sous agitation pendant 1H à 50°C jusqu'à totale dissolution du polymère.

La solution de polyéthyl-2 oxazoline est ajoutée à température ambiante à 45,33g d'un sol colloïdal aqueux d'alumine α Baikowski BA15PS®, le titre massique en alumine est de 75%.

Le milieu réactionnel est blanc laiteux, très homogène sans formation de précipité. Après 1h de mélange à température ambiante, la conductivité thermique est alors mesurée à 20°C en utilisant un appareil type K2D Pro.

Le même milieu réactionnel est alors ajouté goutte-à-goutte dans de l'azote liquide (DEWAR 5 1), le diamètre des gouttes est d'environ 5mm. Les billes obtenues (agrégats de nanoparticules autodispersantes) après trempe dans l'azote liquide sont alors filtrées sur un Büchner en plastique. Elles sont pesées et mises à lyophiliser pendant 48H.

La lyophilisation dure en général 48H. Après 36H, on arrête la lyophilisation et on pèse les billes. Elles sont remises alors à lyophiliser pendant 12H, puis elles sont repesées. Nous considérons que la lyophilisation est terminée si la variation de masse entre t36H et t48H n'excède pas 0,005%. Typiquement 0,5g pour 100g de matière engagée. Les billes sont alors conditionnées sous argon et conservées à température ambiante.

### Exemple 6 :

On a utilisé en tant que polymère hydrosoluble de l'alcool polyvinylique ayant un poids moléculaire en masse compris entre 9 000 et 10 000 g. mol⁻¹, qui a été préalablement dissout dans de l'eau.

5g d'alcool polyvinylique (Aldrich : PM 9000-10000) en poudre sont ajoutés à 95 ml d'eau DI et le milieu réactionnel est mis sous agitation pendant 1H à 50°C jusqu'à totale dissolution du polymère.

La solution de PVA est ajoutée à température ambiante à 45,33g d'un sol colloïdal aqueux d'alumine α Baikowski BA15PS®, le titre massique en alumine est de 75%.

Le milieu réactionnel est blanc laiteux, très homogène sans formation de précipité. Après 1h de mélange à température ambiante, la conductivité thermique est alors mesurée à 20°C en utilisant un appareil type K2D Pro.

Le même milieu réactionnel est alors ajouté goutte-à-goutte dans de l'azote liquide (DEWAR 5 1), le diamètre des gouttes est d'environ 5mm. Les billes obtenues après trempe dans l'azote liquide sont alors filtrées sur un Büchner en plastique. Elles sont pesées et mises à lyophiliser pendant 48H.

La lyophilisation dure en général 48H. Après 36H, on arrête la lyophilisation et on pèse les billes. Elles sont remises alors à lyophiliser pendant 12H, puis elles sont repesées. Nous considérons que la lyophilisation est terminée si la variation de masse entre t36H et t48H n'excède pas 0,005%. Typiquement 0,5g pour 100g de matière engagée. Les billes sont alors conditionnées sous argon et conservées à température ambiante.

### Exemple 7 (comparatif) :

A cet exemple, on a utilisé comme polymère hydrosoluble un alcool polyvinylique ayant un poids moléculaire en masse de 89 000 à 98 000 g. mol⁻¹.

5g d'alcool polyvinylique (Aldrich : PM 89000-98000 g. mol⁻¹) en poudre sont ajoutés à 95 ml d'eau DI et le milieu réactionnel est mis sous agitation pendant 1H à 50°C jusqu'à totale dissolution du polymère.

La solution de PVA est ajoutée à température ambiante à 45,33g d'un sol colloïdal aqueux d'alumine α Baikowski BA15PS®, le titre massique en alumine est de 75%.

Le milieu réactionnel est blanc laiteux, très homogène sans formation de précipité. Après 1h de mélange à température ambiante, la conductivité thermique est alors mesurée à 20°C en utilisant un appareil type K2D Pro.

Le même milieu réactionnel est alors ajouté goutte-à-goutte dans de l'azote liquide (DEWAR 5 1), le diamètre des gouttes est d'environ 5mm. Les billes obtenues après trempe dans l'azote liquide sont alors filtrées sur un Büchner en plastique. Elles sont pesées et mises à lyophiliser pendant 48H.

La lyophilisation dure en général 48H. Après 36H, on arrête la lyophilisation et on pèse les billes. Elles sont remises alors à lyophiliser pendant 12H, puis elles sont repesées. Nous considérons que la lyophilisation est terminée si la variation de masse entre t36H et t48H n'excède pas 0,005%. Typiquement 0,5g pour 100g de matière engagée. Les billes sont alors conditionnées sous argon et conservées à température ambiante.

### Exemple 8 (comparatif) :

A cet exemple, on n'a pas ajouté de polymère hydrosoluble à la suspension colloïdal d'alumine que l'on a simplement trempée et lyophilisée.

### Exemple 9 (comparatif) :

A cet exemple, on n'a pas utilisé de polymère hydrosoluble et le sol colloïdal d'alumine a été simplement séché, sans traitement de trempe ni de lyophilisation.

### Exemple 10 (comparatif) :

A cet exemple, on a utilisé un sol colloïdal d'oxyde de zinc sans ajout de polymère hydrosoluble. Puis, le sol colloïdal d'oxyde de zinc a été trempé dans l'azote liquide puis lyophilisé.

### Exemple 11 (comparatif) :

A cet exemple, on a utilisé un sol colloïdal de zinc sans ajout de polymère hydrosoluble. On a fait simplement sécher à température ambiante le sol colloïdal de zinc.

### Exemple 12 :

A cet exemple, on a appliqué le procédé de l'invention au sol colloïdal d'oxyde de zinc utilisé aux exemples 10 et 11.

On ajoute 1,25g de PVA (Fluka : 4-88) à 33,75 g d'eau DI, le mélange est agité à température ambiante jusqu'à dissolution totale du PVA. La solution de PVA est ajoutée à température ambiante à 50g d'un sol colloïdal aqueux ZnO Nyacol dont le titre massique en ZnO est de 17%. Le milieu réactionnel est blanc laiteux, très homogène sans formation de précipité. Après 1h de mélange à température ambiante, la conductivité thermique est alors mesurée à 20°C en utilisant un appareil type K2D Pro.

Le même milieu réactionnel est alors ajouté goutte-à-goutte dans de l'azote liquide (DEWAR 5 1), le diamètre des gouttes est d'environ 5mm. Les billes obtenues après trempe dans l'azote liquide sont alors filtrées sur un Büchner en plastique. Elles sont pesées et mises à lyophiliser pendant 48H. La lyophilisation dure en général 48H. Après 36H, on arrête la lyophilisation et on pèse les billes. Elles sont remises alors à lyophiliser pendant 12H, puis elles sont repesées. Nous considérons que la lyophilisation est terminée si la variation de masse entre t36H et t48H n'excède pas 0,005%. Typiquement 0,5g pour 100g de matière engagée. Les billes (agrégats) obtenu(e)s sont alors conditionnées sous argon et conservées à température ambiante.

### Exemple 13 :

A cet exemple, on a procédé comme à l'exemple 12 mais en ajoutant seulement 0,75g de polymère hydrosoluble, qui est ici le PVA.

On ajoute 0,75g de PVA (Fluka : 4-88) à 33,75 g d'eau DI, le mélange est agité à température ambiante jusqu'à dissolution totale du PVA. La solution de PVA est ajoutée à température ambiante à 50g d'un sol colloïdal aqueux ZnO Nyacol dont le titre massique en ZnO est de 17%. Le milieu réactionnel est blanc laiteux, très homogène sans formation de précipité. Après 1h de mélange à température ambiante, la conductivité thermique est alors mesurée à 20°C en utilisant un appareil type K2D Pro.

Le même milieu réactionnel est alors ajouté goutte-à-goutte dans de l'azote liquide (DEWAR 5 1), le diamètre des gouttes est d'environ 5mm. Les billes obtenues après trempe dans l'azote liquide sont alors filtrées sur un Büchner en plastique. Elles sont pesées et mises à lyophiliser pendant 48H. La lyophilisation dure en général 48H. Après 36H, on arrête la lyophilisation et on pèse les billes. Elles sont remises alors à lyophiliser pendant 12H, puis elles sont repesées. Nous considérons que la lyophilisation est terminée si la variation de masse entre t36H et t48H n'excède pas 0,005%. Typiquement 0,5g pour 100g de matière engagée. Les billes sont alors conditionnées sous argon et conservées à température ambiante.

### Exemple 14 :

Les nanoparticules autodispersantes obtenues aux exemples précédents ont ensuite été remises en dispersion selon le protocole suivant :
5g de billes sont déposées sur un entonnoir filtre de 125ml de porosité 1 (diamètre correspondant aux pores les gros : 101 à 160 microns), le diamètre de la plaque fritté étant de 60mm, le tout étant monté sur une fiole à vide. On ajoute alors 100ml d'eau DI, celle-ci est alors laissée 20 secondes sans agitation puis on filtre. Le résidu restant sur la plaque frittée, celui-ci est alors séché puis pesé.

Les propriétés de dispersabilité des différentes nanoparticules obtenues aux exemples 1 à 13 sont regroupées au tableau 3 suivant :

**Tableau 3**

| **échantillons** | **Masse récupérée sur le fritté** | **Commentaires sur la « dispersabilité »** |
|---|---|---|
| **Al₂O₃** | | |
| **Exemple 1** | <<0,1g | Très bonne « dispersabilité » |
| **Exemple 2** | <<0,1g | Très bonne « dispersabilité » |
| **Exemple 3** | 0,8-1g | « dispersabilité » Moyenne |
| **Exemple 4** | <<0,1g | Très bonne « dispersabilité » |
| **Exemple 5** | <<0,1g | Très bonne dispersabilité |
| Exemple 6 | 0,8-1g | « dispersabilité » moyenne |
| Exemple 7 | 3g | Mauvaise « dispersabilité » |
| Exemple 8 | 4g | Mauvaise « dispersabilité » |
| Exemple 9 | 4,5g -5g | Très mauvaise « dispersabilité » |

| **ZnO** | | |
|---|---|---|
| Exemple 10 | 3-4g | Mauvaise **« dispersabilité** » |
| Exemple 11 | 4g | Mauvaise « **dispersabilité** » |
| **Exemple 12** | 0,3g | Très bonne « **dispersabilité** » |
| **Exemple 13** | 0,5g | Très bonne « **dispersabilité** » |

On a ensuite étudié les variations de la conductivité thermique de différents fluides en fonction de la masse de nanoparticules ajoutée dans ces fluides.

Pour cela, on a mesuré la variation de conductivité thermique en fonction de la masse de nanoparticules et/ou de polymère hydrosoluble ajoutée :
- d'eau desionisée seule,
- d'eau desionisée contenant 1,6% en masse de polymère hydrosoluble alcool polyvinylique ayant un poids moléculaire en masse compris entre 31 000 et 51 000 g. mol-1, inclus,
- d'un mélange eau desionisée + alumine contenant 10% en masse d'alumine α BA15PS®,
- d'un mélange eau desionisée et nanoparticules d'alumine non traitées par le procédé de l'invention qui est le mélange de l'exemple 1 avant le traitement trempe, lyophilisation et redispersion et de 1,6% en masse, par rapport au poids total de la suspension eau + sol colloïdal + nanoparticules d'alumine + polymère hydrosoluble, d'alcool polyvinylique ayant un poids moléculaire en masse de 31 000 à 51 000 g. mol⁻¹, et
- d'un fluide caloporteur selon l'invention contenant les nanoparticules autodispersantes selon l'invention obtenues à l'exemple 1.

Les résultats sont représentés sous forme de courbes en figure 1.

La courbe de variation de la conductivité thermique desionisée seule sert de référence.

On observe, à partir de la figure 1, que le fluide caloporteur constitué uniquement d'alcool polyvinylique dans de l'eau desionisée présente une légère baisse de la conductivité thermique par rapport à l'eau. Cela est cohérent car la conductivité thermique des polymères hydrosolubles est de 0,1W m⁻¹ K⁻¹.

Tout ajout à un système d'un moins bon conducteur thermique entraîne une baisse de la conductivité thermique du mélange au prorata des rapports des constituants.

On constate également à partir de la figure 1, que lorsque l'on trempe et lyophilise un mélange eau + 1,6% en masse d'alcool polyvinylique et qu'on ajoute de l'eau desionisée pour obtenir à nouveau une concentration en masse de 1,6% d'alcool polyvinylique, on se rapproche légèrement de la conductivité thermique de l'eau desionisée seule mais en restant inférieure.

On constate également qu'en utilisant des nanoparticules autodispersantes selon l'invention, ou obtenues par le procédé selon l'invention, la conductivité thermique du fluide obtenu est encore améliorée.

Mais surtout, de manière tout à fait inattendue, on constate qu'aux faibles concentrations en masse (≤ 10%) de nanoparticules autodispersantes selon l'invention ou obtenues par le procédé de l'invention, le fluide caloporteur selon l'invention montre une conductivité thermique nettement supérieure par rapport à un nanofluide contenant les mêmes quantités d'alumine et d'alcool polyvinylique mais non traités par le procédé de l'invention.

Ainsi, le procédé de l'invention permet d'augmenter la conductivité thermique d'un nanofluide.

Avec une concentration en masse de 10% de nanoparticules autodispersantes d'alumine selon l'invention, le nanofluide de l'invention se comporte comme un fluide contenant 17% en masse de nanoparticules. Il y a donc une augmentation importante de la conductivité thermique par rapport à la masse de matière engagée. De plus le fait de pouvoir travailler à charge plus faible permet de minimiser les problèmes de décantation et/ou d'abrasivité qui apparaissent quand la charge est trop importante.

Cela est vrai aussi bien avec les nanoparticules autodispersantes selon l'invention contenant de l'alumine et le polymère hydrosoluble qu'avec les nanoparticules autodispersantes selon l'invention comprenant de l'oxyde de zinc et le polymère hydrosoluble.

Cela est montré par le tableau 4 ci-après qui montre les conductivités thermiques de nanoparticules d'oxyde de zinc avant traitement selon l'invention, après traitement selon l'invention et après une période de stockage de 15 jours.

**Tableau 4**

| Echantillons 10% massique | Conductivité thermique avant conditionnement Wm⁻¹K⁻¹ | Conductivité thermique après conditionnement Wm⁻¹K⁻¹ | Conductivité thermique après conditionnement (15j) Wm⁻¹K⁻¹ |
|---|---|---|---|
| **ZnO** | | | |
| Exemple 12 (10%) massique | 0,572 | 0,590 | 0,590 |
| Exemple 13 | 0,572 | 0,590 | 0,590 |

| **Al₂O₃** | | | |
|---|---|---|---|
| Exemple 1 | 0,595 | 0,620 | 0,620 |
| Exemple 2 | 0,595 | 0,624 | 0,62 |
| Exemple 3 | 0,570 | 0,570 | 0,570 |
| Exemple 4 | 0,550 | 0,550 | 0,550 |
| Exemple 5 | 0,60 | 0,630 | 0,630 |
| Exemple 6 | 0,570 | 0,570 | 0,570 |
| Exemple 7 | 0,57 | 0,57 | 0,57 |

On voit également, à partir de la figure 1, que l'ajout de nanoparticules d'oxydes d'aluminium à l'eau desionisée contenant de l'alcool polyvinylique augmente nettement la conductivité thermique du fluide ainsi obtenu et que cette conductivité thermique est directement proportionnelle à la quantité d'oxydes ajoutée.

Par ailleurs, on a mesuré la taille des nanoparticules autodispersantes selon l'invention et la taille des mêmes nanoparticules avant traitement selon le procédé de l'invention.

Le procédé de fabrication des nanoparticules selon l'invention n'affecte pas ou peu la répartition granulométrique et la taille des nanoparticules autodispersantes, lorsque celles-ci sont redispersées dans l'eau.

## Revendications

1. Procédé de fabrication de nanoparticules en un oxyde métallique comprenant une étape d'ajout, à une dispersion desdites nanoparticules, d'un polymère hydrosoluble, et une étape de lyophilisation de la dispersion obtenue, et comprenant optionnellement une étape de fabrication d'une dispersion desdites nanoparticules, avant l'étape d'ajout à cette dispersion de nanoparticules d'un polymère hydrosoluble,
**caractérisé en ce que** :
- la dispersion de nanoparticules est une dispersion aqueuse de nanoparticules choisies parmi les nanoparticules d'alumine (Al₂O₃), d'oxyde de zinc (ZnO), d'oxyde de titane (TiO₂), de silice (SiO₂) et d'oxyde de béryllium (BeO),
- le polymère hydrosoluble est choisi parmi les alcools polyvinyliques, les polyéthylènes glycols et les polyvinylpyrrolidones, les polyoxazolines, les amidons, et les mélanges de deux ou plus de ceux-ci, et
- il comprend de plus, après ladite étape d'ajout d'un polymère hydrosoluble à une dispersion desdites nanoparticules, et avant l'étape de lyophilisation de la dispersion obtenue, une étape de trempe thermique de ladite dispersion.

2. Procédé selon la revendication 1 **caractérisé en ce que** le polymère hydrosoluble, est choisi parmi les alcools polyvinyliques, les polyéthylènes glycols et les polyvinylpyrrolidones.

3. Procédé selon la revendication 1 ou 2 **caractérisé en ce que** le polymère hydrosoluble, est un alcool polyvinylique ayant un poids moléculaire en masse compris entre 31 000 et 50 000 g. mol⁻¹ inclus.

4. Procédé selon la revendication 1 ou 2 **caractérisé en ce que** le polymère hydrosoluble est la poly-2-éthyloxazoline d'un poids moléculaire en masse de 50 000 g. mol⁻¹.

5. Procédé selon la revendication 1 ou 2 **caractérisé en ce que** le polymère hydrosoluble est une polyvinylpyrrolidone d'un poids moléculaire en masse compris entre 10 000 et 40 000 g. mol⁻¹ inclus.

6. Procédé selon la revendication 1 ou 2 **caractérisé en ce que** le polymère hydrosoluble est un polyéthylène glycol ayant un poids moléculaire en masse compris entre 7 000 et 35 000 g. mol⁻¹, inclus.

7. Procédé selon l'une quelconque des revendications 1 à 3 **caractérisé en ce que** le polymère hydrosoluble est un acide polyvinylique ayant un poids moléculaire en masse compris entre 31 000 et 50 000 g. mol⁻¹ inclus et les nanoparticules sont des nanoparticules d'alumine ou d'oxyde de zinc et ce que le rapport en masse nanoparticules/polymère hydrosoluble est compris entre 4,5 et 30 inclus, de préférence compris entre 6 et 7 inclus.

8. Procédé selon l'une quelconque des revendications précédentes **caractérisé en ce qu'**il comprend, de plus, une étape de broyage des agrégats obtenus après lyophilisation de la dispersion trempée, lorsque de tels agrégats sont obtenus après cette étape.

9. Procédé de fabrication d'une dispersion de nanoparticules autodispersantes **caractérisé en ce qu'**il comprend le mélange de nanoparticules autodispersantes choisies parmi les nanoparticules d'alumine (Al₂O₃), de silice (SiO₂) et d'oxyde de béryllium (BeO) obtenues par le procédé selon l'une quelconque des revendications 1 à 8 dans de l'eau.

10. Procédé de fabrication selon la revendication 9 caractérisé en que le rapport en masse nanoparticules autodispersantes /eau est compris entre 5 et 10%, inclus.

11. Fluide caloporteur caractérisé en qu'il comprend de l'eau et des nanoparticules autodispersantes comprenant des nanoparticules et un polymère hydrosoluble, lesdites nanoparticules étant choisies parmi les nanoparticules d'alumine (Al₂O₃), d'oxyde de zinc (ZnO), d'oxyde de titane (TiO₂), de silice (SiO₂) et d'oxyde de béryllium (BeO), et ledit polymère hydrosoluble étant choisi parmi les alcools polyvinyliques, les polyéthylènes glycols et les polyvinylpyrrolidones, les polyoxazolines, les amidons, et les mélanges de deux ou plus de ceux-ci.

## Patentansprüche

1. Verfahren zur Herstellung von Nanopartikeln aus einem Metalloxid, einen Schritt des Zugebens eines wasserlöslichen Polymers zu einer Dispersion der Nanopartikel und einen Schritt des Gefriertrocknens der erhaltenen Dispersion umfassend, und optional einen Schritt der Herstellung einer Dispersion der Nanopartikel vor dem Schritt des Zugebens eines wasserlöslichen Polymers zu dieser Dispersion von Nanopartikeln umfassend,
**dadurch gekennzeichnet, dass**:
- die Dispersion von Nanopartikeln eine wässrige Dispersion von Nanopartikeln ist, die ausgewählt sind aus den Nanopartikeln aus Aluminiumoxid (Al2O3), aus Zinkoxid (ZnO), aus Titanoxid (TiO2), aus Siliciumdioxid (SiO2), und aus Berylliumoxid (BeO),
- das wasserlösliche Polymer ausgewählt ist aus den Polyvinylalkoholen, den Glykolpolyethylenen und den Polyvinylpyrrolidonen, den Polyoxazolinen, den Stärken, und den Gemischen aus zwei oder mehr derselben, und
- es außerdem, nach dem Schritt des Zugebens eines wasserlöslichen Polymers zu einer Dispersion der Nanopartikel, und vor dem Schritt des Gefriertrocknens der erhaltenen Dispersion einen Schritt des thermischen Härtens der Dispersion umfasst.

2. Verfahren nach Anspruch 1, **dadurch gekennzeichnet, dass** das wasserlösliche Polymer ausgewählt ist aus den Polyvinylalkoholen, den Glykolpolyethylenen und den Polyvinylpyrrolidonen.

3. Verfahren nach Anspruch 1 oder 2, **dadurch gekennzeichnet, dass** das wasserlösliche Polymer ein Polyvinylalkohol ist, der ein Molekulargewicht in Masse aufweist, das zwischen 31.000 und 50.000 g/mol inklusive enthalten ist.

4. Verfahren nach Anspruch 1 oder 2, **dadurch gekennzeichnet, dass** das wasserlösliche Polymer das Poly-2-Ethyloxazolin eines Molekulargewichts in Masse von 50.000 g/mol ist.

5. Verfahren nach Anspruch 1 oder 2, **dadurch gekennzeichnet, dass** das wasserlösliche Polymer ein Polyvinylpyrrolidon mit einem Molekulargewicht in Masse ist, das zwischen 10.000 und 40.000 g/mol inklusive enthalten ist.

6. Verfahren nach Anspruch 1 oder 2, **dadurch gekennzeichnet, dass** das wasserlösliche Polymer ein Glykolpolyethylen ist, das ein Molekulargewicht in Masse aufweist, das zwischen 7.000 und 35.000 g/mol inklusive enthalten ist.

7. Verfahren nach einem der Ansprüche 1 bis 3, **dadurch gekennzeichnet, dass** das wasserlösliche Polymer eine Polyvinylsäure ist, die das ein Molekulargewicht in Masse aufweist, das zwischen 31.000 und 50.000 g/mol inklusive enthalten ist und die Nanopartikel Nanopartikel aus Aluminiumoxid oder aus Zinkoxid sind und dadurch, dass das Masseverhältnis Nanopartikel / wasserlösliches Polymer zwischen 4,5 und 30 inklusive enthalten ist, vorzugsweise zwischen 6 und 7 inklusive enthalten ist.

8. Verfahren nach einem der vorstehenden Ansprüche, **dadurch gekennzeichnet, dass** es außerdem einen Schritt des Zerkleinerns der erhaltenen Aggregate nach Gefriertrocknen der gehärteten Dispersion umfasst, wenn solche Aggregate nach diesem Schritt erhalten werden.

9. Verfahren zur Herstellung einer Dispersion selbstdispergierender Nanopartikel, **dadurch gekennzeichnet, dass** es das Gemisch von selbstdispergierenden Nanopartikeln, ausgewählt aus den Nanopartikeln aus Aluminiumoxid (Al2O3), aus Siliciumdioxid (SiO2) und aus Berylliumoxid (BeO) umfasst, die durch das Verfahren nach einem der Ansprüche 1 bis 8 in dem Wasser erhalten werden.

10. Verfahren zur Herstellung nach Anspruch 9, **dadurch gekennzeichnet, dass** das Masseverhältnis selbstdispergierende Nanopartikel / Wasser zwischen 5 und 10 % inklusive enthalten ist.

11. Wärmeträgerflüssigkeit, **dadurch gekennzeichnet, dass** sie Wasser und selbstdispergierende Nanopartikel umfasst, die Nanopartikel und ein wasserlösliches Polymer umfassen, wobei die Nanopartikel ausgewählt sind aus den Nanopartikeln aus Aluminiumoxid (Al2O3), aus Zinkoxid (ZnO), aus Titanoxid (TiO2), aus Siliciumdioxid (SiO2), und aus Berylliumoxid (BeO), und das wasserlösliche Polymer ausgewählt ist aus den Polyvinylalkoholen, den Glykolpolyethylenen und den Polyvinylpyrrolidonen, den Polyoxazolinen, den Stärken, und den Gemischen aus zwei oder mehrderselben.

## Claims

1. Method for manufacturing nanoparticles in a metal oxide comprising a step of adding a water-soluble polymer to a dispersion of said nanoparticles, and a step of lyophilisation of the dispersion obtained, and optionally comprising a step of manufacturing a dispersion of said nanoparticles, before the step of adding a water-soluble polymer to this dispersion nanoparticles,
**characterised in that**:
- the dispersion of nanoparticles is an aqueous dispersion of nanoparticles selected from nanoparticles of alumina (Al₂O₃), of zinc oxide (ZnO), of titanium oxide (TiO₂), of silica (SiO₂) and of beryllium oxide (BeO),
- the water-soluble polymer is selected from polyvinyl alcohols, polyethylene glycols and polyvinylpyrrolidones, polyoxazolines, starches, and mixtures of two or more thereof, and
- it further comprises, after said step of adding a water-soluble polymer to a dispersion of said nanoparticles, and before the step of lyophilisation of the dispersion obtained, a step of thermal quenching of said dispersion.

2. Method according to claim 1, **characterised in that** the water-soluble polymer, is selected from polyvinyl alcohols, polyethylene glycols and polyvinylpyrrolidones.

3. Method according to claim 1 or 2, **characterised in that** the water-soluble polymer, is a polyvinyl alcohol having a molecular weight by mass between 31,000 and 50,000 g. mol⁻¹ inclusive.

4. Method according to claim 1 or 2, **characterised in that** the water-soluble polymer is poly-2-ethyloxazoline with a molecular weight by mass of 50,000 g. mol⁻¹.

5. Method according to claim 1 or 2, **characterised in that** the water-soluble polymer is a polyvinylpyrrolidone with a molecular weight by mass between 10,000 and 40,000 g. mol⁻¹ inclusive.

6. Method according to claim 1 or 2, **characterised in that** the water-soluble polymer is a polyethylene glycol having a molecular weight by mass between 7,000 and 35,000 g. mol⁻¹ inclusive.

7. Method according to any one of claims 1 to 3, **characterised in that** the water-soluble polymer is a polyvinyl acid having molecular weight by mass between 31,000 and 50,000 g. mol⁻¹ inclusive and the nanoparticles are nanoparticles of alumina or of zinc oxide and **in that** the nanoparticle/water-soluble polymer ratio by mass is between 4.5 and 30 inclusive, preferably between 6 and 7 inclusive.

8. Method according to any one of the preceding claims, **characterised in that** it comprises, in addition, a step of crushing aggregates obtained after lyophilisation of the quenched dispersion, when such aggregates are obtained after this step.

9. Method for manufacturing a dispersion of self-dispersing nanoparticles, **characterised in that** it comprises the mixture of self-dispersing nanoparticles selected from nanoparticles of alumina (Al₂O₃), of silica (SiO₂) and of beryllium oxide (BeO) obtained by the method according to any one of claims 1 to 8 in water.

10. Method for manufacturing according to claim 9, **characterised in that** the self-dispersing nanoparticle/water ratio by mass is between 5 and 10%, inclusive.

11. Heat transfer fluid, **characterised in that** it comprises water and self-dispersing nanoparticles comprising nanoparticles and a water-soluble polymer, said nanoparticles being selected from nanoparticles of alumina (Al₂O₃), of zinc oxide (ZnO), of titanium oxide (TiO₂), of silica (SiO₂) and of beryllium oxide (BeO), and said water-soluble polymer being selected from polyvinyl alcohols, polyethylene glycols, polyvinylpyrrolidones, polyoxazolines, starches, and mixtures of two or more thereof.
